# EUROPEAN PATENT APPLICATION

(11) **EP 2 824 606 A2**
(43) Date of publication of application: **14.01.2015**
(21) Application number: 14153518.7
(22) Date of filing: 31.01.2014
(51) Int. Cl.: G06K 7/10, G06K 19/06

(54) **Code for reading information of an object**

(30) Priority: 10.07.2013 KR 20130080784
(71) Applicant: Samsung Electronics Co., Ltd, Gyeonggi-do 443-742 (KR)
(72) Inventor: Lee, Byung-jin, Incheon (KR); Kim, Jong-hyuk, Seoul (KR)
(74) Representative: Hewett, Jonathan Michael Richard

(57) **Abstract**

A code for reading information relating to an object is provided. The code includes a plurality of components (110, 120, 130) constituting the object, which are arranged on a board (100) partially constituting the object, following a rule for the code to be to recognized the established information related to the object.

## Description

The present invention relates to a code for reading information related to an object. More particularly, the present invention relates to components constituting an object being arranged to show information related to the object.

In the related art, a barcode has been used for showing information related to an object in the form of a sticker having black bars arranged on white paper according to a predetermined rule, or in the form of being stamped on or carved into the object itself,

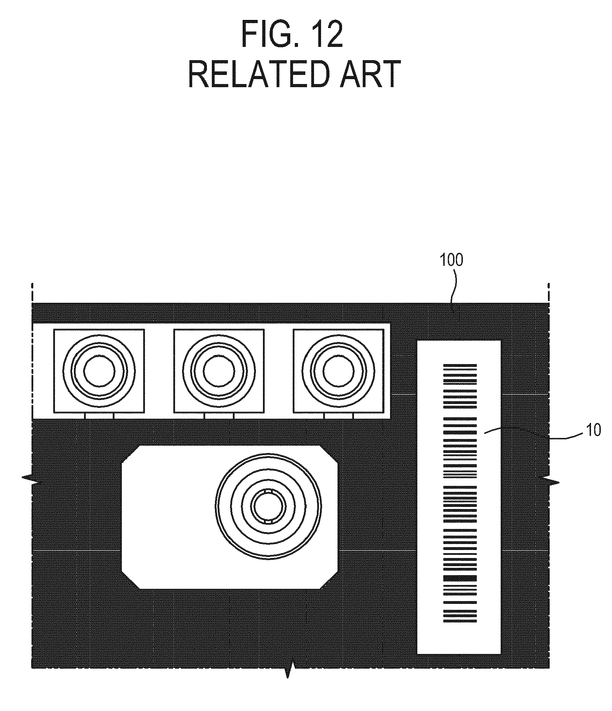

FIG. 12 shows a sticker-type barcode 10 attached to a printed circuit board 100 used in an electronic device, such as an image processing board of a television, a main board of a computer, etc.

Such a sticker-type barcode involves separate printing and attaching processes, and thus has a problem that it spreads or is indistinguishably contaminated in accordance with the state of the print paper.

Such a barcode, in the form of being stamped on or carved into an object by a laser needs separate equipment and processes, and therefore has a problem that it takes much time and cost in product production.

One or more exemplary embodiments of the present invention may provide a code which reduces time and cost in producing an object by coding and arranging components to be basically arranged in the object.

Another exemplary embodiment may provide a code which can inexpensively and simply show information related to an object, without being contaminated or damaged.

According to an aspect of another exemplary embodiment, a code is provided for reading information related to an object, including a plurality of components which constitute the object and arranged on a board partially constituting the object, following a rule established for the code to be recognized as information related to the object.

The board may include a printed circuit board.

The component may include at least one of a resistor, a capacitor, an integrated circuit (IC), a transistor (TR), a diode, a relay, a switch and a light emitting diode (LED), but is not limited thereto.

The plurality of components may be one-dimensionally arranged following a rule established for the code to be recognized as information related to the object.

The plurality of components may be shaped like bars, and the plurality of bar-shaped components are arranged with predetermined spaces there between.

The plurality of components may be two-dimensionally arranged following a rule established for the code to be recognized as the information related to the object.

The plurality of components may be shaped like bars of different lengths, and the plurality of bar-liked components which are different in length are two-dimensionally arranged, following a rule established for the code to be recognized as the information related to the obj ect.

The plurality of components may be mounted to the printed circuit board to have different planar shapes, and the plurality of components having the different shapes are two-dimensionally arranged following a rule established for the code to be recognized as information related to the object.

The printed circuit board may include a pattern on which the plurality of components are arranged, following a rule established for the code to be recognized as information related to the object.

The rule established for the code to be recognized as information related to the object may be determined based on spaces between the pluralities of components.

The rule established for the code to be recognized as information related the object may be determined based on spaces between the plurality of components and lengths of the components.

The rule established for the code to be recognized as information related to the object may be determined based on at least one of a shape of the components, the size of the shape and spaces between the shapes.

The board may include a white code region.

According to another aspect of an exemplary embodiment, an object is provided which includes a code for reading information related to the object, including a plurality of components constituting the object and arranged on a board partially constituting the object, following a rule established for the code to be recognized as information related the obj ect.

An aspect of an exemplary embodiment may provide a code for reading information related to an object, the code including a plurality of components constituting the object, wherein the code represents information related to the object.

The components constituting the object may be arranged on a board partially constituting the object.

The board may be a printed circuit board.

The components comprise at least one of a resistor, a capacitor and an integrated circuit (IC).

The plurality of components may be one-dimensionally arranged following a rule established for the code to be recognized as information related to the object.

In addition, the plurality of components may be shaped like bars, and the plurality of bar-shaped components are arranged with predetermined spaces there between.

According to another aspect of the present invention, there is provided an object comprising a plurality of components arranged on a circuit board, wherein plurality of components are arranged according to a rule such that arrangement represents a code encoding information relating to the object.

According to another aspect of the present invention, there is provided a method of encoding information in an object, the method comprising determining a code for encoding information, determining a rule for physically representing the code, and arranging a plurality of components on a circuit board partially constituting the object according to the rule, such that the arrangement of the plurality of components represents a code encoding information relating to the object.

The above and/or other aspects will become apparent and more readily appreciated from the following description of exemplary embodiments, taken in conjunction with the accompanying drawings, in which:
FIGs. 1 to 5 are views which explain a principle of a barcode;
FIGs. 6 and 7 are views which show a code according to a first exemplary embodiment;
FIGs. 8 and 9 are views which show a code according to a second exemplary embodiment;
FIGs. 10 and 11 are views which show a code according to a third exemplary embodiment; and
FIG. 12 shows a sticker type barcode applied to a printed circuit board (PCB) of the related art.

Below, exemplary embodiments will be described in detail with reference to accompanying drawings. The following embodiments describe only configurations directly related to the written description, and descriptions related to other configurations will be omitted. However, it will be understood that the omitted configurations are not necessary for understanding an apparatus or system to which the inventive concept is applied. Further, like numerals refer to like elements throughout.

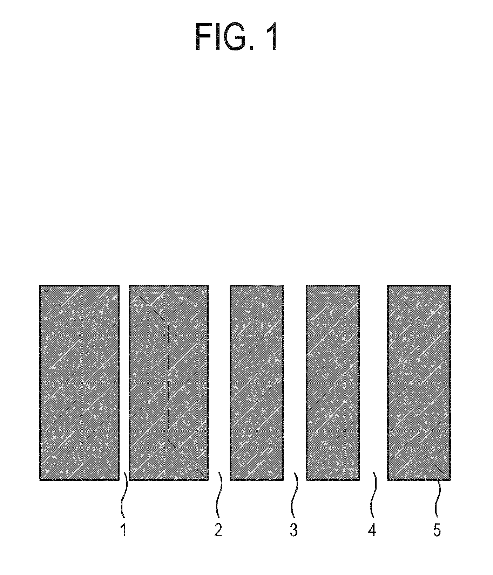

As shown in FIG. 1, in response to five black bars 5 being arranged, predetermined spaces between the bars 5 may be regarded as white lines 1, 2, 3 and 4. The white line 1 may be a reference, and the other lines 2, 3 and 4 may be converted by a binary notation. Specifically, the second line 2 may represent a third position (2²) from the back of a binary digit, the third line 3 may represent a second position (2¹) from the back of the binary digit, and the fourth line 4 may represent a first position (2⁰) from the back of the binary digit. In other words, digits converted by calculating the other three white lines 2, 3 and 4 except the reference line 1 in the binary notation, can correspond to and show information related to an object.

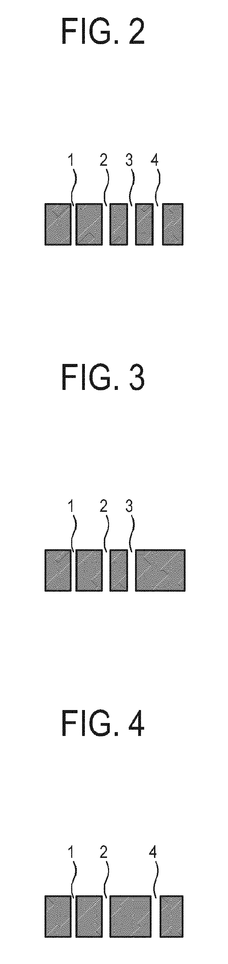

FIGs. 2 to 4 are examples of showing the information through the barcode.

The barcode of FIG. 2 shows 7 (=1x2²+1x2¹+1x2⁰).

The barcode of FIG. 3 shows 6 (=1x2²+1x2¹+0x2⁰).

The barcode of FIG. 4 shows 5 (=1x2²+0x2¹+1x2⁰).

The code showing the information related to the object according to a first exemplary embodiment will be described as it is applied to a printed circuit board (hereinafter, referred to as a "PCB") 100 such as an image processing board of a television and a main board of a personal computer (PC). Of course, the image processing board, the PC main board, or the like PCB is nothing but an example. Alternatively, the code may be applied to any object that necessarily includes a plurality of components.

In the image processing board or a main board, a plurality of components such as a resistor 110, a capacitor 120, integrated circuits 130, a transistor (TR), a diode, a relay, a switch, a light emitting diode (LED), etc. are mounted to a PCB 100 through a surface mounting technology (SMT) process. The PCB 100 is a board on which a conductive pattern is printed so that the components can perform their functions. The PCB 100 may have a white code region by setting a code region for forming a code with the components. Such a white code region has an advantage that spaces between the components can be clearly distinguishable when a code scanner is used for reading the information. Of course, the code region is not necessary since the original ground color (for example, green) for the board can be distinguishable from the components.

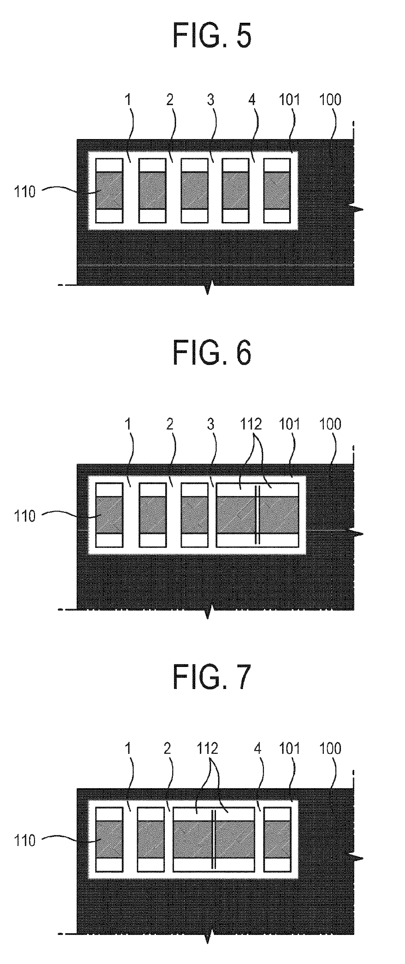

FIGs. 5 to 7 show examples where five resistors 110 are one-dimensionally arranged in parallel with predetermined spaces there between, following a rule for the code to be established recognized as information related to the PCB 100, according to the first exemplary embodiment. That is, information is read from the presence of the width of short-directional space between each of the resistors 110.

FIG. 5 shows that five same resistors 110 are arranged like the barcode of FIG. 2, which represents 7 (=1x2²+1x2¹+1x2⁰).

FIG. 6 shows that three same resistors 110 and two large-width resistors 112 arranged like the barcode of FIG. 3, which represents 6 (=1x2²+1x2¹+0x2⁰).

FIG. 7 shows that three of the same resistors 110 and two large-width resistors 112 are arranged like the barcode of FIG. 4, which represents 5 (=1x2²+0x2¹+1x2⁰).

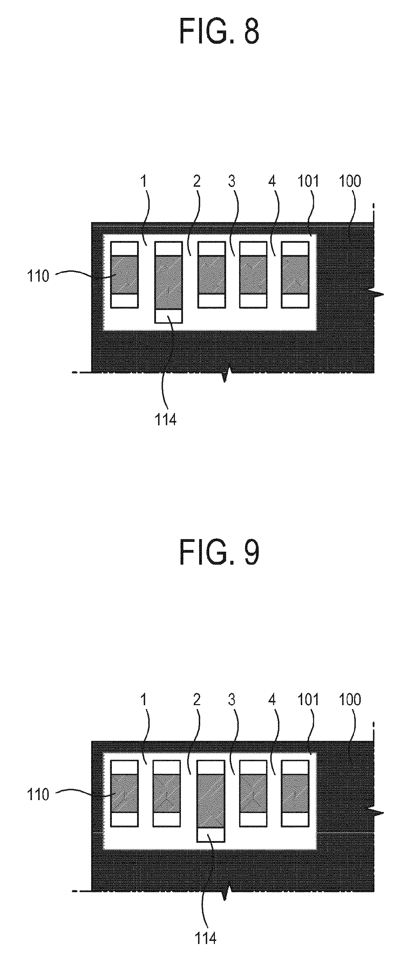

FIGs. 8 and 9 show examples where four short resisters 110 and one long resistor 114 are two-dimensionally arranged in parallel with predetermined spaces there between, following a rule for the code to be established recognized as information related to the PCB 100 according to a second exemplary embodiment. That is, information is read from difference in length and width between the resistors 110.

The PCB information based on the two-dimensional arrangement of the resistors 110 and 112 within the code region 101 of the PCB 100 may be read through the width of the spaces between the five resistors 110 and 112 like that of FIGs. 5 to 7. Also, to read the PCB information based on the difference in length between the resistors, the long resistor 114 may be placed at the second position as shown in FIG. 8 in a high definition (HD) type of image processing board, and the long resistor 114 may be placed at the third position as shown in FIG. 9 in a full high definition (FHD) type of image processing board. Of course, the long resistor 114 may be placed at the fourth position in an ultra high definition (UHD) type image processing board.

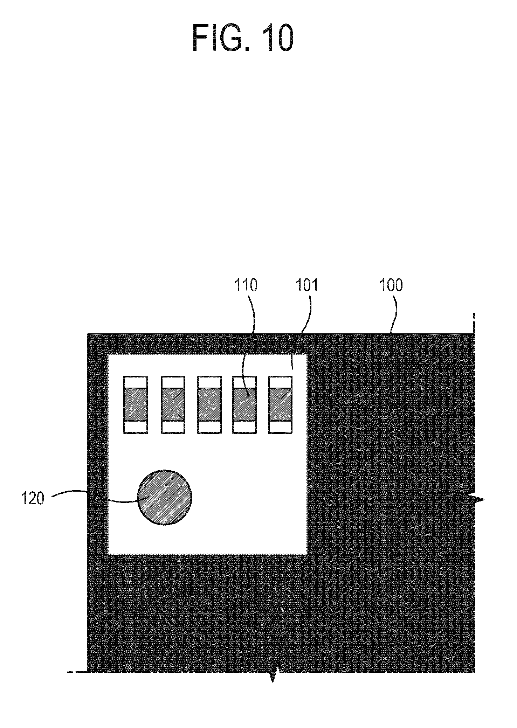

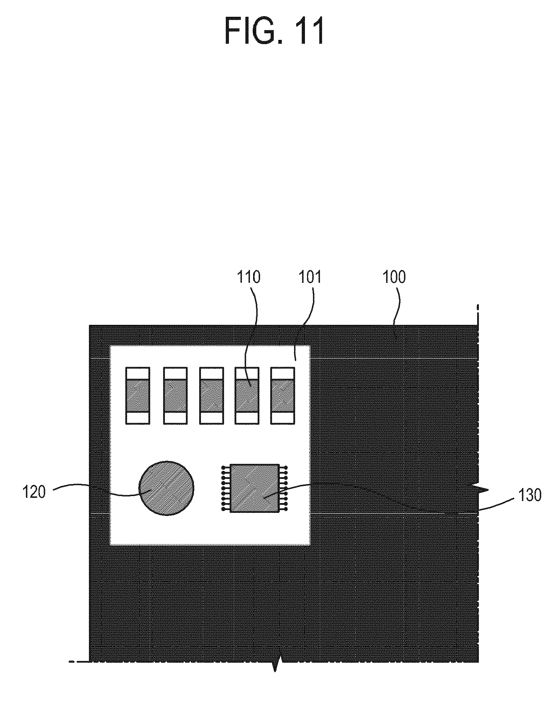

FIGs. 10 and 11 show examples that five resistors 110 and one capacitor 120 or one integrated circuit (IC) 130 are two-dimensionally arranged in parallel with predetermined spaces there between, following a rule for the code to be established recognized as information related to the PCB 100 according to a third exemplary embodiment. That is, information is read from the width of the space between the resistors 110 and a planar shape in the state that other components are arranged in the code region 101.

The PCB information based on the two-dimensional arrangement of the resistors 110 and 114, the capacitor 120 or the IC 130 within the code region 101 of the PCB 100 may be read through the width of the spaces between the five resistors 110, like that of FIGs. 5 to 7. For the read of the PCB information based on the planar shape of the other components except for the resistor, for example, the capacitor 120 and the IC 130, the capacitor may be placed at the lower left side as shown in FIG. 10 in the HD type image processing board, and the IC 130 may be placed at the lower right side in the FHD type image processing board. In the UHD type image processing board, the capacitor 120 and the IC 130 may be all placed at the lower left side and at the lower right side, respectively. At this time, the capacitor 120 may be recognized as a circle and the IC 130 may be recognized as a rectangle through scanning of a code recognition scanner as they are arranged in the code region 101. In addition to the planar shape of the components, the size and space may be used for coding additional information.

As described above, the information of the PCB may be coded through the arrangement of the necessarily involved resistors 110, 112 and 114, the capacitor 120 and the IC 130. For coding purposes, a dummy cheap resistor may be added to the PCB 100, as necessary.

According to an exemplary embodiment, components basically involved in an object and having a predetermined shaped are arranged following a certain rule and coded, and therefore, no process and no equipment is needed for printing the barcode showing information related to the object, thereby reducing production cost and time.

In addition, according to an exemplary embodiment, the components are arranged for coding, and there is little probability that the code will be contaminated or damaged, thereby providing a good code for reading the information related to the object.

Although a few exemplary embodiments have been shown and described, it will be appreciated by those skilled in the art that changes may be made in these exemplary embodiments without departing from the invention, the scope of which is defined in the appended claims.

## Claims

1. A code for reading information related to an object, the code comprising a plurality of components constituting the object which are arranged on a board partially constituting the object, following a rule established for the code to be recognized as information related to the object.

2. The code according to claim 1, wherein the board comprises a printed circuit board.

3. The code according to claim 2, wherein the component comprises at least one of a resistor, a capacitor and an integrated circuit (IC).

4. The code according to claim 3, wherein the plurality of components are one-dimensionally arranged following a rule established for the code to be recognized as information related to the object.

5. The code according to claim 4, wherein the plurality of components are shaped like bars, and the plurality of bar-shaped components are arranged with predetermined spaces there between.

6. The code according to claim 3, wherein the plurality of components are two-dimensionally arranged following a rule established for the code to be recognized as information related to the object.

7. The code according to claim 6, wherein the plurality of components are shaped like bars different in length, and the plurality of bar-liked components different in length are two-dimensionally arranged following a rule for the code to be recognized as the established information related to the object.

8. The code according to claim 6, wherein the plurality of components are mounted to the printed circuit board to have different planar shapes, and the plurality of components having the different shapes are two-dimensionally arranged following a rule established for the code to be recognized as the information related the object.

9. The code according to claim 2, wherein the printed circuit board comprises a pattern on which the plurality of components are arranged following a rule established for the code to be recognized as the information related to the object.

10. The code according to any one of the preceding claims, wherein the rule established for the code to be recognized as the information related to the object is determined based on spaces between the plurality of components.

11. The code according to any one of claims 1 to 9, wherein the rule established for the code to be recognized as the information related to the object is determined based on spaces between the plurality of components and the lengths of the components.

12. The code according to any one of claims 1 to 9, wherein the rule established for the code to be recognized as the information related to the object is determined based on at least one of a shape of the components, the size of the shape and spaces between the shapes.

13. The code according to any one of the preceding claims, wherein the board comprises a white code region.

14. An object including a code for reading information related the object, the object comprising a plurality of components constituting the object and arranged on a board partially constituting the object, following a rule established for the code to be recognized as the information related to the object.

15. A method of encoding information in an object, the method comprising:
determining a code for encoding information,
determining a rule for physically representing the code, and
arranging a plurality of components on a circuit board, partially constituting the object, according to the determined rule, such that the arrangement of the plurality of components represents the determined code encoding information relating to the object.
